# EUROPEAN PATENT APPLICATION

(11) **EP 4 247 030 A1**
(43) Date of publication of application: **20.09.2023**
(21) Application number: 21909140.2
(22) Date of filing: 08.12.2021
(51) Int. Cl.: H04W 12/03, H04W 12/06, H04W 24/02

(54) **DEVICE NETWORK DISTRIBUTION METHOD, AND MOBILE TERMINAL AND STORAGE MEDIUM**

(30) Priority: 23.12.2020 CN 202011538977
(71) Applicant: Huawei Technologies Co., Ltd., Shenzhen, Guangdong 518129 (CN)
(72) Inventor: ZHANG, Yunxiang, Shenzhen, Guangdong 518129 (CN); DAI, Shuanqing, Shenzhen, Guangdong 518129 (CN); ZHAO, Xin, Shenzhen, Guangdong 518129 (CN)
(74) Representative: Isarpatent
(86) International application number: PCT/CN2021/136272
(87) International publication number: WO 2022/135143

(57) **Abstract**

Embodiments of this application provide a device network configuration method, a mobile terminal, and a storage medium, and relate to the field of communication technologies. The method includes: obtaining network interface card information of a first device; creating a virtual network interface card based on the network interface card information; obtaining, by using the virtual network interface card, network information corresponding to a wireless router; and sending the network information to the first device, to enable the first device to establish a connection with the wireless router by using the network information. According to the method provided in embodiments of this application, a device network connection speed can be increased, and a connection success rate of an internet of things device can be improved, thereby improving device network configuration efficiency.

## Description

This application claims priority to Chinese Patent Application No. 202011538977.0, filed with the China National Intellectual Property Administration on December 23, 2020 and entitled "DEVICE NETWORK CONFIGURATION METHOD, MOBILE TERMINAL, AND STORAGE MEDIUM", which is incorporated herein by reference in its entirety.

### TECHNICAL FIELD

Embodiments of this application relate to the field of communication technologies, and in particular, to a device network configuration method, a mobile terminal, and a storage medium.

### BACKGROUND

With rapid development of the mobile internet and the internet of things, people can manage and control an internet of things device more conveniently through the internet. Currently, the internet of things device usually registers identity information with a cloud server through the internet, so that a user can manage and control the internet of things device.

### SUMMARY

Embodiments of this application provide a device network configuration method, a mobile terminal, and a storage medium, to provide a network configuration manner for an internet of things device.

According to a first aspect, an embodiment of this application provides a device network configuration method that is applied to a mobile terminal. The method includes:
obtaining network interface card information of a first device. Specifically, the mobile terminal may be a mobile device such as a mobile phone or a tablet, or may be a mobile device of another type. A specific type of the mobile terminal is not particularly limited in this embodiment of this application. The first device may be an internet of things device for which a network is to be configured. For example, the internet of things device may be a smart device such as a smart light or an intelligent socket. A specific type of the first device is not particularly limited in this embodiment of this application.

The method includes: creating a virtual network interface card based on the network interface card information. Specifically, the virtual network interface card may correspond to a real network interface card in the first device.

The method includes: obtaining, by using the virtual network interface card, network information corresponding to a wireless router. Specifically, the network information may be used to establish a connection with the wireless router. For example, the network information may include channel information, key information, IP address information, and MAC address information.

The method includes: sending the network information to the first device, to enable the first device to establish a connection with the wireless router by using the network information.

In this embodiment, a virtual network interface card corresponding to the real network interface card of the first device is used at the mobile terminal to obtain the network information corresponding to the wireless router, and the network information is sent to the first device. In this way, time for the first device to obtain merchant network information can be reduced, and network configuration efficiency of the first device can be improved.

In a possible implementation, the obtaining network interface card information of a first device includes:
receiving the network interface card information broadcast by the first device. Specifically, the first device may actively broadcast the network interface card information, so that a nearby mobile terminal can receive the network interface card information. For example, the first device may broadcast the network interface card information when no connection is established with the wireless router, and may stop broadcasting the network interface card information after the connection is established with the wireless router.

In a possible implementation, before the obtaining network interface card information of a first device, the method further includes:
sending a query request to the first device, where the query request is for requesting to obtain the network interface card information of the first device. Specifically, the mobile terminal may actively request to obtain the network interface card information from the first device. For example, the mobile terminal may approach the first device, and send the request to the first device in an NFC manner.

In a possible implementation, the query request is further used for requesting to obtain identity information of the first device, and the method further includes:
receiving the identity information sent by the first device. Specifically, the first device may further send the identity information to the mobile terminal. The identity information may be a device ID of the first device, and the identity information may be a unique identifier used to identify the first device. Therefore, the identity information may be an identifier of another type. A specific form of the identity information is not particularly limited in this application.

The method further includes: sending a registration request to a second device based on the identity information, where the registration request is used to obtain a registration code. Specifically, the registration code is used by the first device to perform identity registration on an internet.

In a possible implementation, the method further includes:
receiving the registration code sent by the second device; and sending the registration code to the first device. Specifically, the mobile terminal applies for the registration code, so that the first device can omit a step of applying for the registration code, and the network configuration efficiency of the first device can be improved.

In a possible implementation, the network information includes channel information, key information, and IP address information, and the obtaining, by using the virtual network interface card, network information corresponding to a wireless router includes:
performing, by using the virtual network interface card, a channel scan to obtain the channel information; performing, by using the virtual network interface card, access authentication with the wireless router to obtain the key information; and performing, by using the virtual network interface card, DHCP application to obtain the IP address information. Specifically, the channel information may be information about a channel used to establish a connection with the wireless router. For example, an SSID of the wireless router may be retrieved by using the foregoing channel. The key information is used to encrypt or decrypt data transmitted between any device and the wireless router. It may be understood that the key may be an asymmetric key or a symmetric key. A form of the key is not particularly limited in this application. The IP address information may include an IP address, an NDS address, and a gateway address.

In a possible implementation, the network information further includes MAC address information, and the obtaining, by using the virtual network interface card, network information corresponding to a wireless router includes:
performing, by using the virtual network interface card, ARP resolution to obtain the MAC address information. Specifically, the MAC address information may be a MAC address of the wireless router. The ARP resolution is performed on the mobile terminal to obtain the MAC address, so that time for the first device to perform the ARP resolution can be reduced, thereby improving the network configuration efficiency of the first device.

According to a second aspect, an embodiment of this application provides device network configuration apparatus. The device network configuration apparatus includes:
a receiving module, configured to obtain network interface card information of a first device;
a creating module, configured to create a virtual network interface card based on the network interface card information;
an obtaining module, configured to obtain, by using the virtual network interface card, network information corresponding to a wireless router; and
a first sending module, configured to send the network information to the first device, to enable the first device to establish a connection with the wireless router by using the network information.

In a possible implementation, the receiving module is further configured to receive the network interface card information broadcast by the first device.

In a possible implementation, the apparatus further includes:
a query module, configured to send a query request to the first device, where the query request is used to request to obtain the network interface card information of the first device.

In a possible implementation, the query request is further used to request to obtain identity information of the first device. The apparatus further includes:
a registration module, configured to receive identity information sent by the first device; and send a registration request to a second device based on the identity information, where the registration request is used to obtain a registration code.

In a possible implementation, the apparatus further includes:
a second sending module, configured to receive the registration code sent by the second device, and send the registration code to the first device.

In a possible implementation, the network information includes channel information, key information, and IP address information. The obtaining module is further configured to perform, by using the virtual network interface card, a channel scan to obtain the channel information; perform, by using the virtual network interface card, access authentication with the wireless router to obtain the key information; and perform, by using the virtual network interface card, DHCP application to obtain the IP address information.

In a possible implementation, the network information further includes MAC address information, and the obtaining module is further configured to perform, by using the virtual network interface card, ARP resolution to obtain the MAC address information.

According to a third aspect, an embodiment of this application provides a mobile terminal. The terminal includes:
a memory, where the memory is configured to store computer program code, and the computer program code includes instructions. When the mobile terminal reads the instructions from the memory, the mobile terminal is enabled to perform the following steps:
obtaining network interface card information of a first device;
creating a virtual network interface card based on the network interface card information;
obtaining, by using the virtual network interface card, network information corresponding to a wireless router; and
sending the network information to the first device, to enable the first device to establish a connection with the wireless router by using the network information.

In a possible implementation, when the instructions are executed by the mobile terminal, the mobile terminal is enabled to perform a step of obtaining the network interface card information of the first device. The step includes:
receiving the network interface card information broadcast by the first device.

In a possible implementation, when the instructions are executed by the mobile terminal, before the mobile terminal is enabled to perform a step of obtaining the network interface card information of the first device, the mobile terminal further performs the following step:
sending a query request to the first device, where the query request is for requesting to obtain the network interface card information of the first device.

In a possible implementation, the query request is further used for requesting to obtain identity information of the first device, and when the instructions are executed by the mobile terminal, the mobile terminal is enabled to further perform the following steps:
receiving the identity information sent by the first device; and
sending a registration request to a second device based on the identity information, where the registration request is for obtaining a registration code.

In a possible implementation, when the instructions are executed by the mobile terminal, the mobile terminal is enabled to further perform the following steps:
receiving the registration code sent by the second device; and
sending the registration code to the first device.

In a possible implementation, the network information includes channel information, key information, and IP address information, and when the instructions are executed by the mobile terminal, the mobile terminal is enabled to perform a step of obtaining, by using the virtual network interface card, the network information corresponding to the wireless router. The step includes:
performing, by using the virtual network interface card, a channel scan to obtain the channel information;
performing, by using the virtual network interface card, access authentication with the wireless router to obtain the key information; and
performing, by using the virtual network interface card, DHCP application to obtain the IP address information.

In a possible implementation, the network information further includes MAC address information. When the instructions are executed by the mobile terminal, the mobile terminal is enabled to perform the step of obtaining, by using the virtual network interface card, the network information corresponding to the wireless router. The step includes:
performing, by using the virtual network interface card, ARP resolution to obtain the MAC address information.

According to a fourth aspect, an embodiment of this application provides a computer-readable storage medium. The computer-readable storage medium stores a computer program. When the computer program is run on a computer, the computer is enabled to perform the method according to the first aspect.

According to a fifth aspect, an embodiment of this application provides a computer program. When the computer program is executed by a computer, the computer program is used to perform the method according to the first aspect.

In a possible design, the program in the fifth aspect may be all or partially stored in a storage medium encapsulated with a processor, or may be all or partially in a memory that is not encapsulated with the processor.

### BRIEF DESCRIPTION OF DRAWINGS

FIG. 1 is a diagram of an architecture of an application scenario according to an embodiment of this application;
FIG. 2 is a flowchart of an embodiment of a device network configuration method according to this application;
FIG. 3 is a schematic flowchart of access authentication according to an embodiment of this application;
FIG. 4 is a flowchart of another embodiment of a device network configuration method according to this application;
FIG. 5 is a schematic diagram of a structure of a device network configuration apparatus according to an embodiment of this application; and
FIG. 6 is a schematic diagram of a structure of a mobile terminal according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the description of embodiments of this application, unless otherwise specified, "a plurality of means two or more than two.

Currently, in an identity registration process, an internet of things device is usually connected to an internet by using a router, so that identity information of the internet of things device can be registered in a cloud server. However, when the internet of things device is connected to the router, processes such as a wireless hotspot (Wi-Fi) channel scan, Wi-Fi access authentication, and a dynamic host configuration protocol (Dynamic Host Configuration Protocol, DHCP) usually need to be performed. Therefore, time consumption is long, and a connection success rate is not high. Consequently, user experience is reduced.

Based on the foregoing problem, embodiments of this application provide a device network configuration method. This can increase a device network connection speed, and improve a connection success rate of the internet of things device, thereby improving device network configuration efficiency.

Embodiments of this application may be applied to a mobile terminal and the internet of things device. The mobile terminal may also be a terminal device, user equipment (User Equipment, UE), an access terminal, a subscriber unit, a subscriber station, a mobile station, a mobile console, a remote station, a remote terminal, a mobile device, a user terminal, a terminal, a radio communications equipment, a user agent, or a user apparatus. The mobile terminal may be a station (STATION, ST) in a WLAN, may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or another processing device connected to a wireless modem, a vehicle-mounted device, an internet of vehicles terminal, a computer, a laptop computer, a handheld communication device, a handheld computing device, a satellite radio device, a wireless modem card, a television set top box (set top box, STB), customer premise equipment (customer premise equipment, CPE), and/or another device configured to perform communication in a Wi-Fi system, or a mobile terminal in a next-generation communication system such as a mobile terminal in a 5G network, or a mobile terminal in a future evolved public land mobile network (Public Land Mobile Network, PLMN). The internet of things device may include a life device with a wireless communication function, for example, a lamp, a socket, a refrigerator, and an air conditioner.

A specific form of the mobile terminal and the internet of things device that perform the technical solution is not specially limited in embodiments of this application.

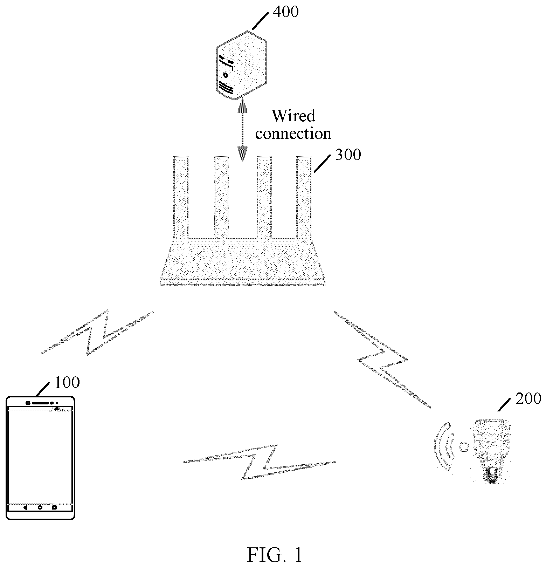

With reference to FIG. 1 to FIG. 3, the following describes a device network configuration method provided in an embodiment of this application.

FIG. 1 is a diagram of an architecture of an embodiment of an application scenario of a device network configuration method according to this application. In FIG. 1, a mobile terminal 100 may communicate with a first device 200 in an ultra-short distance mode (for example, Wi-Fi ultra-short distance or near field communication (Near Field Communication, NFC)), or in another wireless communication manner. The first device 200 may be an internet of things device. The mobile terminal 100 may communicate with a wireless router 300 in a wireless manner (for example, Wi-Fi). The first device 200 may also communicate with the wireless router 300 in a wireless manner (for example, Wi-Fi), to establish a wireless connection. The wireless router 300 may implement a wired connection with a second device 400. The second device 400 may be a cloud server. The cloud server may include a single server, or may include a server cluster. This is not limited in this embodiment of this application.

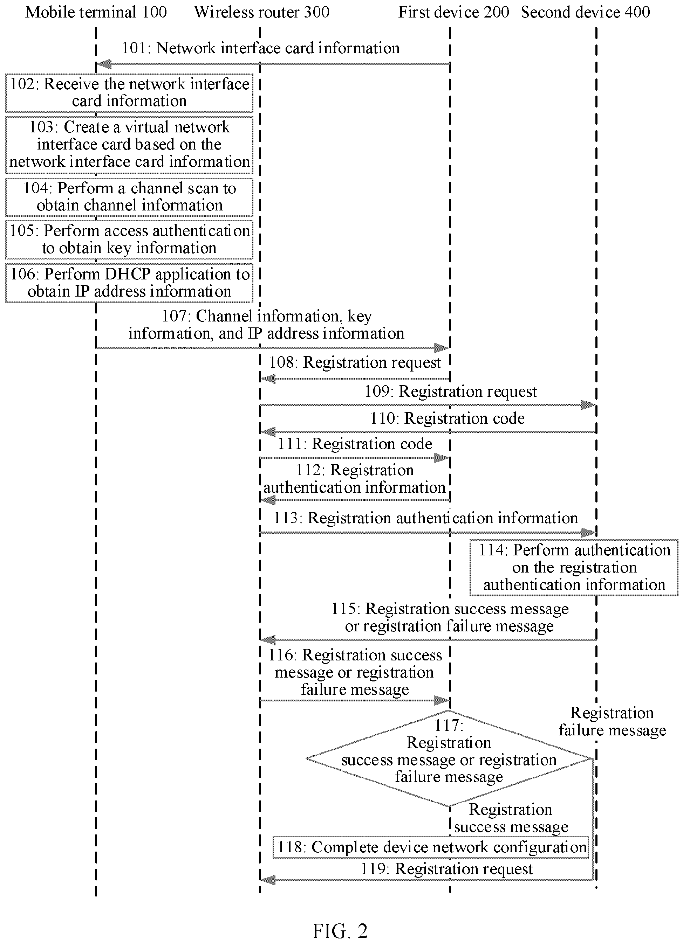

FIG. 2 is a schematic flowchart of an embodiment of a device network configuration method according to this application. The method may include the following steps.

Step 101: A first device 200 broadcasts network interface card information.

Specifically, the network interface card information may include information related to a network interface card of the first device 200, for example, a media access control (Media Access Control, MAC) address of the network interface card. The network interface card of the first device 200 may be configured to establish a connection with a wireless router 300.

The first device 200 may detect a status of connection between the first device 200 and the wireless router 300, to determine whether to establish a connection with the wireless router 300.

If the first device 200 determines that no connection with the wireless router 300 is established, the first device 200 may broadcast the network interface card information, so that a nearby mobile terminal 100 can receive the network interface card information.

Further, the first device 200 may further send a prompt indicating that no connection with the wireless router 300 is established, to prompt a user. For example, the first device 200 may implement a prompt by blinking an indicator. For example, the indicator may blink a yellow light, or blink a red light, or may blink another color. This is not limited in this embodiment of this application.

If the first device 200 determines that the connection with the wireless router 300 has been established, the first device 200 stops broadcasting the network interface card information.

Further, the first device 200 may further send a prompt indicating that the connection has been established with the wireless router 300, to prompt the user. For example, the first device 200 may display the indicator steady on. For example, the indicator may be steady green, or may be another color. This is not limited in this embodiment of this application.

It should be noted that a range in which the first device 200 broadcasts the network interface card information is related to power of an antenna. To be specific, larger power of the antenna indicates a larger range in which the first device 200 broadcasts the network interface card information, and smaller power of the antenna indicates a smaller range in which the first device 200 broadcasts the network interface card information. The power of the antenna may be preset in the first device 200, or may be manually adjusted by the user. This is not limited in this embodiment of this application.

Step 102: The mobile terminal 100 receives the network interface card information of the first device 200.

Specifically, in a process in which the mobile terminal 100 approaches the first device 200, if the mobile terminal 100 is in the range in which the first device 200 broadcasts the network interface card information, the mobile terminal 100 may receive the network interface card information.

Step 103: The mobile terminal 100 creates a virtual network interface card based on the network interface card information.

Specifically, after receiving the network interface card information sent by the first device 200, the mobile terminal 100 may create the virtual network interface card based on the network interface card information. The virtual network interface card may correspond to the first device 200. In other words, the virtual network interface card simulates a real network interface card of the first device 200.

Step 104: The mobile terminal 100 completes a channel scan with the wireless router 300 by using the virtual network interface card, to obtain channel information corresponding to the virtual network interface card.

Specifically, the mobile terminal 100 may perform the channel scan by using the virtual network interface card, to obtain channel information corresponding to the wireless router 300, that is, the channel information may correspond to the wireless router 300. A channel may be used for identifying a communication channel with the wireless router 300. For example, a specific channel on which a service set identifier (Service Set Identifier, SSID) of the wireless router 300 is located may be determined based on the channel information. The mobile terminal 100 performs the channel scan by using the virtual network interface card to obtain the channel information, and sends the channel information to the first device 200. Therefore, the first device 200 can directly use the channel information without performing the channel scan, thereby saving channel scan time. After receiving the channel information sent by the mobile terminal 100, the first device 200 may communicate, based on the channel information, with the wireless router 300 on a channel corresponding to the channel information.

Step 105: The mobile terminal 100 completes access authentication with the wireless router 300 by using the virtual network interface card, to obtain key information corresponding to the virtual network interface card.

Specifically, the mobile terminal 100 may alternatively complete the access authentication with the wireless router 300 by using a virtual network interface card. Therefore, the mobile terminal 100 may establish an association with the wireless router 300. After the mobile terminal 100 establishes the association with the wireless router 300, the wireless router 300 may further initiate a 4-step handshake, to obtain the key information corresponding to the virtual network interface card. The key information may be used for encrypting service data (for example, sending a registration request). For example, the key information may include a pairwise transient key (Pairwise Transient Key, PTK) and a group temporal key (Group Temporal Key, GTK). The PTK may be a key for encrypting unicast data, and the GTK may be a key for encrypting multicast or broadcast data. It may be understood that the key information is stored on both the mobile terminal 100 and the wireless router 300.

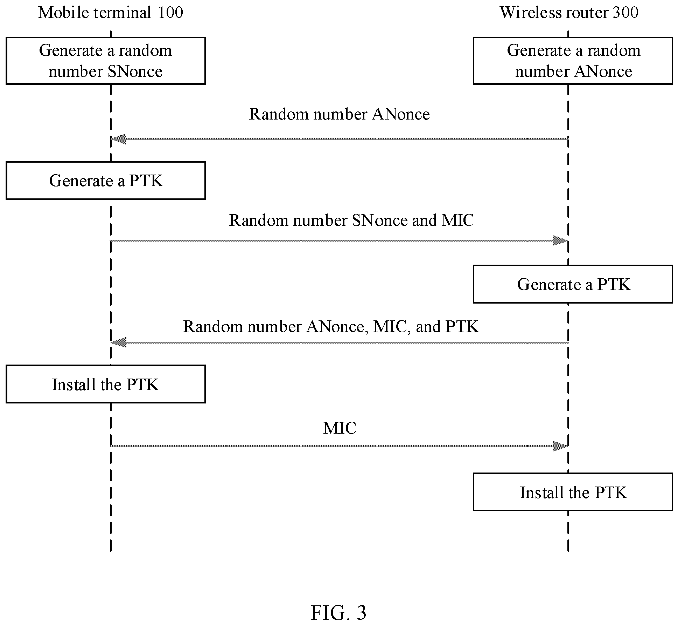

FIG. 3 is a schematic flowchart of the 4-step handshake between the mobile terminal 100 and the wireless router 300.

It should be noted that, for details of a process of the foregoing access authentication and the 4-step handshake, refer to the Wi-Fi-802.11 protocol, and details are not described herein again.

Step 106: The mobile terminal 100 completes DHCP application with the wireless router 300 by using the virtual network interface card, to obtain IP address information corresponding to the virtual network interface card.

Specifically, the IP address information may include information such as an IP address, a gateway address, and a domain name system (Domain Name System, DNS) server address corresponding to the virtual network interface card. In other words, the IP address information corresponds to the first device 200.

The mobile terminal 100 interacts with the wireless router 300 through DHCP, and may obtain the IP address information in a dynamic manner. The DHCP is a network protocol of one local area network, and is usually applied in a large local area network environment. A main function of the DHCP is centralized management and allocation of an IP address, so that a host in the network environment dynamically obtains information such as an IP address, a gateway address, and a DNS server address, and address utilization is improved. The DHCP is a current technology. For details, refer to related documents. Details are not described herein again.

It should be noted that step 104, step 105, and step 106 may be simultaneously performed, or may be performed in any sequence. This is not limited in this embodiment of this application.

Step 107: The mobile terminal 100 sends the channel information, the key information, and the IP address information to the first device 200.

Specifically, after obtaining the channel information, the key information, and the IP address information from the wireless router 300, the mobile terminal 100 may send the channel information, the key information, and the IP address information to the first device 200.

Optionally, after obtaining the channel information, the key information, and the IP address information from the wireless router 300, the mobile terminal 100 may further disable the virtual network interface card, to cut off communication with the wireless router, thereby saving resources of the mobile terminal 100 and the wireless router 300. A step of sending the channel information, the key information, and the IP address information and a step of disabling the virtual network interface card may be performed simultaneously, or may be performed in any sequence. This is not limited in this embodiment of this application.

Step 108: The first device 200 sends a registration request to the wireless router 300.

Specifically, after receiving the channel information, the key information, and the IP address information that are sent by the mobile terminal 100, the first device 200 may directly switch to a channel corresponding to the channel information, so that the first device 200 can communicate with the wireless router 300 on the channel. The first device 200 directly switches a channel, so that the channel scan time can be saved, thereby increasing time for device network configuration and improving device network configuration efficiency.

Further, the first device 200 may further perform address resolution protocol (Address Resolution Protocol, ARP) resolution based on the gateway address in the IP address information, to obtain an MAC address of the wireless router 300.

After setting the IP address, the gateway address, and the DNS server address based on the IP address information, and obtaining the MAC address of the wireless router 300, the first device 200 may communicate with the wireless router 300 on the channel.

For example, the first device 200 may send the registration request to the wireless router 300, so that the wireless router 300 can forward the registration request. The first device 200 may encrypt the registration request by using the key information. After receiving the encrypted registration request, the wireless router 300 may decrypt the registration request based on prestored key information, and forward the registration request to the second device 400 (for example, a cloud server), so that the second device 400 can process the registration request. The registration request is used by the first device 200 to request a registration code from the second device 400. The registration request includes identity information of the first device 200 (for example, information such as a device ID of the first device 200).

In specific implementation, the first device 200 may alternatively encapsulate the registration request into a data packet, so that the data packet can be transmitted on the internet. The data packet may include a packet header and a payload. The packet header may include information such as an IP address (for example, an IP address of the second device 400 and an IP address of the first device 200), and the payload may include registration request information. It may be understood that the IP address of the first device 200 is a source IP address, and the IP address of the second device 400 is a target IP address.

Step 109: The wireless router 300 forwards, to the second device 400, the registration request sent by the first device 200.

Specifically, after receiving the registration request sent by the first device 200, the wireless router 300 may obtain packet header information corresponding to the registration request. The wireless router 300 may further forward the registration request to the second device 400 based on the target IP address (for example, the IP address of the second device 400) in the packet header.

Step 110: The second device 400 receives the registration request forwarded by the wireless router 300, and sends the registration code to the wireless router 300.

Specifically, after receiving the registration request forwarded by the wireless router 300, the second device 400 may resolve the source IP address (for example, the IP address of the first device 200) in the packet header, and allocate one registration code. The registration code may correspond to the identity information of the first device 200 in the registration request. The registration code may be any number or character. This is not limited in this application.

After allocating the registration code to the first device 200, the second device 400 may further send the registration code to the wireless router 300. In specific implementation, the second device 400 may encapsulate the registration code into a data packet. A packet header of the data packet includes the IP address of the second device 400 and the IP address of the first device 200. It may be understood that the IP address of the first device 200 is a target IP address, and the IP address of the second device 400 is a source IP address.

Step 111: The wireless router 300 receives the registration code from the second device 400, and forwards the registration code to the first device 200.

Specifically, the wireless router 300 may perform forwarding based on the target IP address (for example, the IP address of the first device 200) corresponding to the registration code.

Step 112: The first device 200 receives the registration code forwarded by the wireless router 300, and sends registration authentication information to the wireless router 300.

Specifically, the registration authentication information may include the identity information and a registration code of the first device 200, so that the second device 400 can perform authentication based on the identity information and the registration code.

Step 113: The wireless router 300 forwards the registration authentication information to the second device 400.

Step 114: The second device 400 receives the registration authentication information forwarded by the wireless router, and performs authentication on the registration authentication information.

Specifically, after receiving the registration authentication information forwarded by the wireless router, the second device 400 parses the identity information and the registration code of the first device 200 in the registration authentication information, and compares the identity information and the registration code of the first device 200 in the registration authentication information with prestored identity information and a prestored registration code of the first device 200.

Step 115: The second device 400 sends a registration success message or a registration failure message to the wireless router 300.

Specifically, if the identity information and the registration code of the first device 200 in the registration authentication information is consistent with the prestored identity information and the prestored registration code of the first device 200, current authentication succeeds. Registration of the first device 200 with the second device 400 is completed, and the registration success message is sent to the wireless router 300.

If the identity information and the registration code of the first device 200 in the registration authentication information is not consistent with the prestored identity information and the prestored registration code of the first device 200, current authentication fails. Registration of the first device 200 with the second device 400 is rejected, and the registration failure message is sent to the wireless router 300.

Step 116: The wireless router 300 receives the registration success message or the registration failure message sent by the second device 400, and forwards the registration success message or the registration failure message to the first device 200.

Step 117: The first device 200 determines whether a received message is the registration success message or the registration failure message.

Step 118: If the first device 200 receives the registration success message forwarded by the wireless router 300, current network configuration succeeds.

Step 119: If the first device 200 receives the registration failure message forwarded by the wireless router 300, current network configuration fails.

Optionally, after the network configuration of the first device 200 fails, the first device 200 may further initiate a registration request again. For example, the first device 200 may repeatedly perform step 108 to step 117 until the registration success message is received. Alternatively, the first device 200 may preset a quantity threshold of times of re-initiating the registration request. When a quantity of times of re-initiating the registration request reaches the quantity threshold, the first device 200 may stop initiating the registration request.

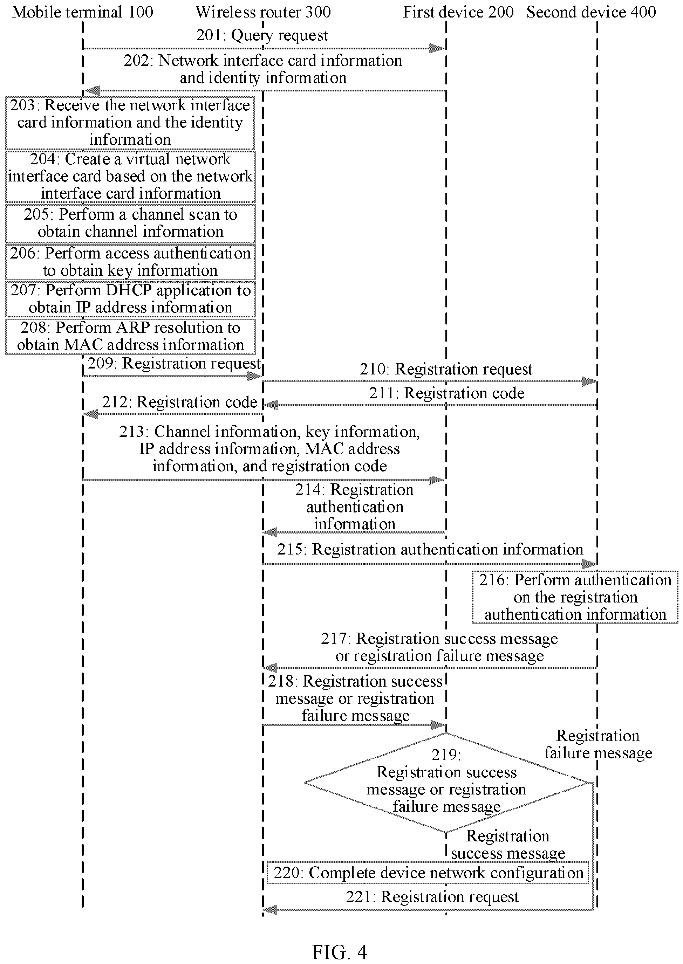

FIG. 4 is a schematic flowchart of another embodiment of a device network configuration method according to this application. The method may include the following steps.

Step 201: A mobile terminal 100 requests network interface card information from a first device 200.

Specifically, the mobile terminal 100 may actively obtain the network interface card information of the first device 200. For example, a user may open an app of the mobile terminal 100, and may initiate a query request to the first device 200 through the app of the mobile terminal 100, to obtain the network interface card information of the first device 200.

Optionally, the user may alternatively approach the first device 200 by holding the mobile terminal 100 (for example, NFC), to trigger the mobile terminal 100 to send the query request to the first device 200, so that the network interface card information of the first device 200 can be obtained.

It may be understood that the mobile terminal 100 may be alternatively triggered in another manner to send the query request to the first device 200, to obtain the network interface card information of the first device 200. This is not limited in this embodiment of this application.

Step 202: The first device 200 sends the network interface card information to the mobile terminal 100.

Specifically, after receiving the query request of the mobile terminal 100, the first device 200 may send the network interface card information to the mobile terminal 100.

Further, the first device 200 may further send identity information of the first device 200 to the mobile terminal 100. The identity information may be information such as a device ID of the first device 200.

Step 203: The mobile terminal 100 receives the network interface card information and the identity information of the first device 200.

Step 204: The mobile terminal 100 creates a virtual network interface card based on the network interface card information of the first device 200.

Specifically, after receiving the network interface card information sent by the first device 200, the mobile terminal 100 may create the virtual network interface card based on the network interface card information. The virtual network interface card may correspond to the first device 200. In other words, the virtual network interface card simulates a real network interface card of the first device 200.

Step 205: The mobile terminal 100 performs a channel scan by using the virtual network interface card to obtain channel information corresponding to the virtual network interface card.

Specifically, the mobile terminal 100 may perform the channel scan by using the virtual network interface card, to obtain channel information corresponding to the wireless router 300, that is, the channel information may correspond to the wireless router 300. A channel may be used for identifying a communication channel with the wireless router 300. For example, a specific channel on which a service set identifier (Service Set Identifier, SSID) of the wireless router 300 is located may be determined based on the channel information. The mobile terminal 100 performs the channel scan by using the virtual network interface card to obtain the channel information, and sends the channel information to the first device 200. Therefore, the first device 200 can directly use the channel information without performing the channel scan, thereby saving channel scan time. After receiving the channel information sent by the mobile terminal 100, the first device 200 may communicate, based on the channel information, with the wireless router 300 on a channel corresponding to the channel information.

Step 206: The mobile terminal 100 performs access authentication by using the virtual network interface card to obtain key information corresponding to the virtual network interface card.

Specifically, the mobile terminal 100 may alternatively complete the access authentication with the wireless router 300 by using a virtual network. Therefore, the mobile terminal 100 may establish an association with the wireless router 300. After the mobile terminal 100 establishes the association with the wireless router 300, the wireless router 300 may further initiate a 4-step handshake, to obtain the key information corresponding to the virtual network interface card. The key information may be used for encrypting service data (for example, sending a registration request). For example, the key information may include a pairwise transient key (Pairwise Transit Key, PTK) and a group temporal key (Group Temporal Key, GTK). The PTK may be a key for encrypting unicast data, and the GTK may be a key for encrypting multicast or broadcast data. It may be understood that the key information is stored on both the mobile terminal 100 and the wireless router 300.

It should be noted that, for details of a process of the foregoing access authentication and the 4-step handshake, refer to the Wi-Fi-802.11 protocol, and details are not described herein again.

Step 207: The mobile terminal 100 performs DHCP application by using the virtual network interface card to obtain IP address information corresponding to the virtual network interface card.

Specifically, the IP address information may include information such as an IP address, a gateway address, and a domain name system (Domain Name System, DNS) server address corresponding to the virtual network interface card. In other words, the IP address information corresponds to the first device 200.

The mobile terminal 100 interacts with the wireless router 300 through DHCP, and may obtain the IP address information in a dynamic manner. The DHCP is a network protocol of one local area network, and is usually applied in a large local area network environment. A main function of the DHCP is centralized management and allocation of an IP address, so that a host in the network environment dynamically obtains information such as an IP address, a gateway address, and a DNS server address, and address utilization is improved. The DHCP is a current technology. For details, refer to related documents. Details are not described herein again.

Step 208: The mobile terminal 100 performs, by using the virtual network interface card, ARP resolution to obtain MAC address information of the wireless router 300.

Specifically, the mobile terminal 100 may perform the ARP resolution based on the gateway address in the IP address information, to obtain the MAC address information of the wireless router 300.

Step 209: The mobile terminal 100 sends a registration request to the wireless router 300.

Specifically, the registration request may be sent by the mobile terminal 100. The registration request may include the identity information of the first device 200. The registration request is used by the mobile terminal 100 to request a registration code from a second device 400.

For example, the mobile terminal 100 may send the registration request to the wireless router 300, so that the wireless router 300 can forward the registration request. The mobile terminal 100 may encrypt the registration request by using the key information. After receiving the encrypted registration request, the wireless router 300 may decrypt the registration request based on prestored key information, and forward the registration request to the second device 400 (for example, a cloud server), so that the second device 400 can process the registration request. The registration request is used by the mobile terminal 100 to request the registration code from the second device 400. The registration request may include the identity information (for example, information such as the device ID of the first device 200) of the first device 200.

In specific implementation, the mobile terminal 100 may alternatively encapsulate the registration request into a data packet, so that the data packet can be transmitted on the internet. The data packet may include a packet header and a payload. The packet header may include information such as an IP address (for example, an IP address of the second device 400 and an IP address of the mobile terminal 100), and the payload may include registration request information. It may be understood that the IP address of the mobile terminal 100 is a source IP address, and the IP address of the second device 400 is a target IP address.

Step 210: The wireless router 300 forwards the registration request to the second device 400.

Specifically, after receiving the registration request sent by the mobile terminal 100, the wireless router 300 may obtain packet header information corresponding to the registration request. The wireless router 300 may further forward the registration request to the second device 400 based on the target IP address (for example, the IP address of the second device 400) in the packet header.

Step 211: The second device 400 sends the registration code to the wireless router 300.

Specifically, after receiving the registration request forwarded by the wireless router 300, the second device 400 may allocate one registration code. The registration code may correspond to the identity information of the first device 200 in the registration request. The registration code may be any number or character. This is not limited in this application.

After allocating the registration code to the first device 200, the second device 400 may further send the registration code to the wireless router 300. In specific implementation, the second device 400 may encapsulate the registration code into a data packet. A packet header of the data packet includes the IP address of the second device 400 and the IP address of the mobile terminal 100. It may be understood that the IP address of the mobile terminal 100 is a source IP address, and the IP address of the second device 400 is a target IP address.

Step 212: The wireless router 300 forwards the registration code to the mobile terminal 100.

Specifically, after receiving the registration code sent by the second device 400, the wireless router 300 may forward the registration code to the mobile terminal 100 based on the target IP address (for example, the IP address of the mobile terminal 100) corresponding to the registration code.

It should be noted that step 209 to step 212 may be performed after any one of step 203 to step 208. This is not limited in this embodiment of this application.

Step 213: The mobile terminal 100 sends the channel information, the key information, the IP address information, the MAC address information, and the registration code to the first device 200.

Step 214: The first device 200 sends registration authentication information to the wireless router 300.

Specifically, after receiving the channel information, the key information, the IP address information, and the MAC address information that are sent by the mobile terminal 100, the first device 200 may directly switch to the channel corresponding to the channel information, thereby saving the channel scan time. Then, the first device 200 may communicate with the wireless router 300 based on the foregoing MAC address information, so that ARP resolution time can be saved, and a device network configuration speed can be improved. In this case, the first device 200 may further send, to the wireless router 300, registration authentication information encrypted by using the key information. The registration authentication information may include the identity information and the registration code of the first device 200, so that the second device 400 can perform authentication on the first device 200 based on the identity information and the registration code.

Step 215: The wireless router 300 forwards the registration authentication information to the second device 400.

Step 216: The second device 400 performs authentication on the registration authentication information.

Specifically, after receiving the registration authentication information forwarded by the wireless router 300, the second device 400 parses the identity information and the registration code of the first device 200 in the registration authentication information, and compares the identity information and the registration code of the first device 200 in the registration authentication information with prestored identity information and prestored registration code of the first device 200.

Step 217: The second device 400 sends a registration success message or a registration failure message to the wireless router 300.

Specifically, if the identity information and the registration code of the first device 200 in the registration authentication information is consistent with the prestored identity information and the prestored registration code of the first device 200, current authentication succeeds. Registration of the first device 200 with the second device 400 is completed, and the registration success message is sent to the wireless router 300.

If the identity information and the registration code of the first device 200 in the registration authentication information is not consistent with the prestored identity information and the prestored registration code of the first device 200, current authentication fails. Registration of the first device 200 with the second device 400 is rejected, and the registration failure message is sent to the wireless router 300.

Step 218: The wireless router 300 forwards the registration success message or the registration failure message to the first device 200.

Step 219: The first device 200 determines whether a received message is the registration success message or the registration failure message.

Step 220: If the first device 200 receives the registration success message forwarded by the wireless router 300, current network configuration succeeds.

Step 221: If the first device 200 receives the registration failure message forwarded by the wireless router 300, current network configuration fails.

Optionally, after the network configuration of the first device 200 fails, the first device 200 may further initiate a registration request again until the registration success message is received. Alternatively, the first device 200 may preset a quantity threshold of times of re-initiating the registration request. When a quantity of times of re-initiating the registration request reaches the quantity threshold, the first device 200 may stop initiating the registration request.

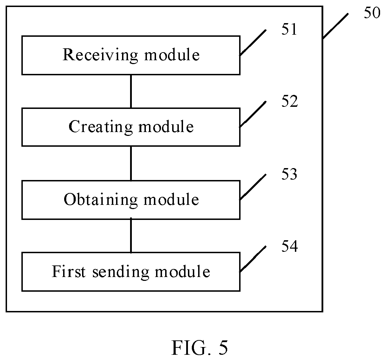

FIG. 5 is a schematic diagram of a structure of an embodiment of a device network configuration apparatus according to this application. As shown in FIG. 5, the device network configuration apparatus 50 may include a receiving module 51, a creating module 52, an obtaining module 53, and a first sending module 54.

The receiving module 51 is configured to obtain network interface card information of a first device.

The creating module 52 is configured to create a virtual network interface card based on the network interface card information.

The obtaining module 53 is configured to obtain, by using the virtual network interface card, network information corresponding to a wireless router.

The first sending module 54 is configured to send the network information to the first device, to enable the first device to establish a connection with the wireless router by using the network information.

In a possible implementation, the receiving module 51 is further configured to receive the network interface card information broadcast by the first device.

In a possible implementation, the apparatus 50 further includes a query module 55.

The query module 55 is configured to send a query request to the first device, where the query request is for requesting to obtain the network interface card information of the first device.

In a possible implementation, the query request is further used for requesting to obtain identity information of the first device. The apparatus 50 further includes a registration module 56.

The registration module 56 is configured to: receive the identity information sent by the first device; and send a registration request to a second device based on the identity information, where the registration request is for obtaining a registration code.

In a possible implementation, the apparatus 50 further includes a second sending module 57.

The second sending module 57 is configured to: receive the registration code sent by the second device; and send the registration code to the first device.

In a possible implementation, the network information includes channel information, key information, and IP address information. The obtaining module 53 is further configured to: perform, by using the virtual network interface card, a channel scan to obtain the channel information; perform, by using the virtual network interface card, access authentication with the wireless router to obtain the key information; and perform, by using the virtual network interface card, DHCP application to obtain the IP address information.

In a possible implementation, the network information further includes MAC address information, and the obtaining module 53 is further configured to perform, by using the virtual network interface card, ARP resolution to obtain the MAC address information.

It should be understood that division into the foregoing modules of the device network configuration apparatus shown in FIG. 5 is merely logical function division. In an actual implementation, all or some modules may be integrated into one physical entity, or may be physically separated. In addition, all the modules may be implemented in a form of software invoked by using a processing element or may be implemented in a form of hardware. Alternatively, some modules may be implemented in the form of software invoked by using the processing element, and some modules are implemented in the form of hardware. For example, a detection module may be a separately disposed processing element, or may be integrated into a chip of an electronic device for implementation. Implementation of another module is similar to this. In addition, all or some of these modules may be integrated together, or may be implemented independently. In an implementation process, steps in the foregoing methods or the foregoing modules can be implemented by using a hardware integrated logical circuit in a processor element, or by using instructions in a form of software.

For example, the foregoing modules may be one or more integrated circuits configured to implement implementing the foregoing method, for example, one or more application specific integrated circuits (Application Specific Integrated Circuit, ASIC for short below), one or more digital signal processors (Digital Signal Processor, DSP for short below), or one or more field programmable gate arrays (Field Programmable Gate Array, FPGA for short below). For another example, the modules may be integrated together, and implemented in a form of a system-on-a-chip (System-On-a-Chip, SOC for short below).

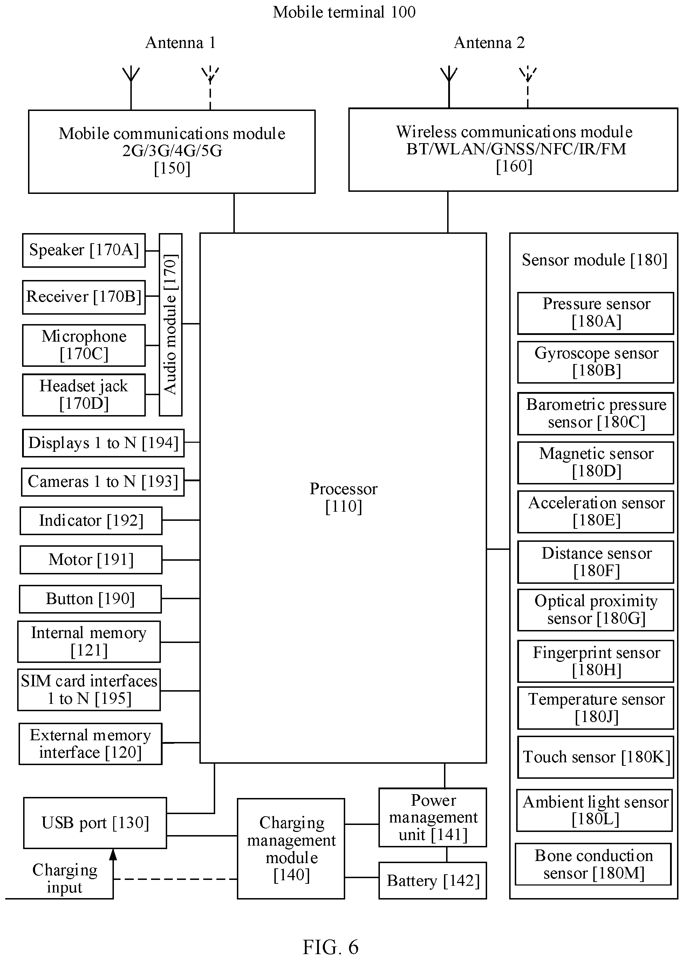

FIG. 6 is a schematic diagram of a structure of a mobile terminal 100.

The mobile terminal 100 may include a processor 110, an external storage interface 120, an internal memory 121, a universal serial bus (universal serial bus, USB) port 130, a charging management module 140, a power management unit 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the mobile terminal 100. In some other embodiments of this application, the mobile terminal 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory, configured to store instructions and data, may be further disposed in the processor 110. In some embodiments, the memory in the processor 110 is a cache memory. The memory may store instructions or data that is just used or cyclically used by the processor 110. If the processor 110 needs to use the instructions or the data again, the instructions or the data may be directly invoked from the memory. Repeated access is avoided, waiting time of the processor 110 is reduced, and system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus that includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like by using different I2C bus interfaces. For example, the processor 110 may be coupled to the touch sensor 180K by using the I2C interface, to enable the processor 110 to communicate with the touch sensor 180K by using an I2C bus interface, thereby implementing a touch function of the mobile terminal 100.

The I2S interface may be used for audio communication. In some embodiments, the processor 110 may include a plurality of groups of I2S buses. The processor 110 may be coupled to the audio module 170 by using an I2S bus, to implement communication between the processor 110 and the audio module 170. In some embodiments, the audio module 170 may transmit an audio signal to the wireless communications module 160 by using the I2S interface, to implement a function of answering a call through a Bluetooth headset.

The PCM interface may also be used for the audio communication, to sample, quantize, and encode an analog signal. In some embodiments, the audio module 170 and the wireless communications module 160 may be coupled through a PCM bus interface. In some embodiments, the audio module 170 may transmit an audio signal to the wireless communications module 160 through the PCM interface, to implement a function of answering a call through the Bluetooth headset. Both the I2S interface and the PCM interface may be used for the audio communication.

The UART interface is a universal serial data bus for asynchronous communication. The bus may be a two-way communication bus. The bus switches data that is to be transmit between serial communication and concurrent communication. In some embodiments, the UART interface is generally used to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through a Bluetooth headset.

The MIPI interface may be used to connect the processor 110 to peripheral components such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile terminal 100. The processor 110 communicates with the display 194 through the DSI interface, to implement a display function of the mobile terminal 100.

The GPIO interface may be configured by software. The GPIO interface may be configured as a control signal, or may be configured as a data signal. In some embodiments, the GPIO interface may be used to connect the processor 110 to the camera 193, the display 194, the wireless communications module 160, the audio module 170, the sensor module 180, and the like. The GPIO interface may also be configured as the I2C interface, the I2S interface, the UART interface, the MIPI interface, or the like.

A USB port 130 is an interface that complies with a USB standard specification, and may be specifically a mini USB port, a micro USB port, a USB Type-C port, or the like. The USB port 130 may be used to connect to a charger to charge the mobile terminal 100, or may be used to transmit data between the mobile terminal 100 and a peripheral device. The USB port may also be used to connect to a headset and play audio through the headset. The interface may be further used to connect to other electronic devices such as an AR device.

It may be understood that an interface connection relationship between modules shown in this embodiment of the present invention is merely an example for description, and does not constitute a structural limitation on the mobile terminal 100. In some other embodiments of this application, the mobile terminal 100 may alternatively use an interface connection manner different from that in the foregoing embodiment, or a combination of a plurality of interface connection manners.

The charging management module 140 is configured to receive charging input from a charger. The charger may be a wireless charger, or may be a wired charger. In some embodiments of wired charging, the charging management module 140 may receive charging input of the wired charger through the USB port 130. In some embodiments of wireless charging, the charging management module 140 may receive wireless charging input through a wireless charging coil of the mobile terminal 100. When charging the battery 142, the charging management module 140 may further supply power to an electronic device through the power management unit 141.

The power management unit 141 is configured to connect the battery 142 and the charging management module 140 to the processor 110. The power management unit 141 receives input from the battery 142 and/or the charging management module 140, and supplies power to the processor 110, the internal memory 121, the display 194, the camera 193, the wireless communications module 160, and the like. The power management unit 141 may be further configured to monitor parameters such as a battery capacity, a quantity of battery cycle times, and a battery health status (leakage and impedance). In some other embodiments, the power management unit 141 may also be disposed in the processor 110. In some other embodiments, the power management unit 141 and the charging management module 140 may also be disposed in a same component.

A wireless communication function of the mobile terminal 100 may be implemented through the antenna 1, the antenna 2, the mobile communications module 150, the wireless communications module 160, the modem processor, the baseband processor, and the like.

The antenna 1 and the antenna 2 are used to send and receive an electromagnetic wave signal. Each antenna in the mobile terminal 100 may be used to cover a single or a plurality of communication frequency bands. Different antennas may also be multiplexed to improve antenna utilization. For example, the antenna 1 may be multiplexed as a diversity antenna of a wireless local area network. In other embodiments, an antenna may be used in combination with a tuning switch.

The mobile communications module 150 may provide a solution for wireless communication such as 2G/3G/4G/5G applied to the mobile terminal 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and send the electromagnetic wave to the modem processor for demodulation. The mobile communications module 150 may further amplify a signal modulated by the modem processor, and convert the signal into an electromagnetic wave through the antenna 1. In some embodiments, at least some function modules of the mobile communications module 150 may be disposed in the processor 110. In some embodiments, the at least some function modules of the mobile communications module 150 and at least some modules of the processor 110 may be disposed in a same component.

The modem processor may include a modulator and a demodulator. The modulator is used to modulate a to-be-sent low frequency baseband signal into a medium and high frequency signal. The demodulator is used to demodulate the received electromagnetic wave signal into a low frequency baseband signal. Then, the demodulator sends the demodulated low frequency baseband signal to the baseband processor for processing. The low frequency baseband signal is processed by the baseband processor and then sent to the application processor. The application processor outputs a sound signal through an audio device (which is not limited to the speaker 170A, the receiver 170B, or the like), or displays an image or video through the display 194. In some embodiments, the modem processor may be an independent component. In some other embodiments, the modem processor may be independent of the processor 110, and is disposed in a same device as the mobile communications module 150 or another functional module.

The wireless communications module 160 may provide a wireless communication solution that is applied to the mobile terminal 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communication processor module. The wireless communications module 160 receives an electromagnetic wave through the antenna 2, performs frequency modulation and filtering processing on an electromagnetic wave signal, and sends the processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the mobile terminal 100, the antenna 1 is coupled to the mobile communications module 150, and the antenna 2 is coupled to the wireless communications module 160, so that the mobile terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), a satellite based augmentation system (satellite based augmentation systems, SBAS), and/or the like.

The mobile terminal 100 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information.

The display 194 is used to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile terminal 100 may include one or N display screens 194, where N is a positive integer greater than 1.

The mobile terminal 100 may implement the photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a still image or a video. An optical image of an object is generated through the lens, and is projected onto the photosensitive element. The photosensitive element may be a charge coupled device (charge coupled device, CCD) or a complementary metal-oxide-semiconductor

(complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile terminal 100 may include one or N cameras 193, where N is a positive integer greater than 1.

The digital signal processor is configured to process a digital signal, and may process other digital signals in addition to the digital image signal. For example, when the mobile terminal 100 selects a frequency, the digital signal processor is configured to perform Fourier transform and the like on frequency energy.

The video codec is configured to compress or decompress a digital video. The mobile terminal 100 may support one or more video codecs. In this way, the mobile terminal 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the mobile terminal 100 may be implemented through the NPU, for example, image recognition, facial recognition, speech recognition, and text understanding.

The external storage interface 120 may be configured to connect an external memory card, for example, a Micro SD card, to expand a storage capability of the mobile terminal 100. The external memory card communicates with the processor 110 through the external storage interface 120, to implement a data storage function. For example, music and video files can be saved on the external memory card.

The internal memory 121 may be configured to store computer executable program code, and the executable program code includes instructions. The internal memory 121 may include a program storage area and a data storage area. The program storage area may store an operating system, an application program required by at least one function (such as a sound playing function or an image playing function), and the like. The data storage area may store data (such as audio data and a phone book) created in a process of using the mobile terminal 100. In addition, the internal memory 121 may include a high-speed random access memory, or may include a nonvolatile memory, for example, at least one magnetic disk storage device, a flash memory, or a universal flash storage (universal flash storage, UFS). The processor 110 executes various functional applications and data processing of the mobile terminal 100 by running the instructions stored in the internal memory 121 and/or the instructions stored in the memory disposed in the processor.

The mobile terminal 100 may implement an audio function through the audio module 170, the speaker 170A, the receiver 170B, the microphone 170C, the headset jack 170D, the application processor, and the like. For example, the audio function includes music playing, recording, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The mobile terminal 100 may listen to music or answer a hands-free call through the speaker 170A.

The receiver 170B, also referred to as an "earpiece", is configured to convert an audio electrical signal into a sound signal. When the mobile terminal 100 answers a call or listens to a voice message, the receiver 170B may be placed near a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the mobile terminal 100. In some other embodiments, two microphones 170C may be disposed in the mobile terminal 100. In addition to collecting a sound signal, the microphones may further implement a noise reduction function. In some other embodiments, three, four, or more microphones 170C may be disposed in the mobile terminal 100, to collect a sound signal, reduce noise, identify a sound source, implement a directional recording function, and the like.

The headset jack 170D is configured to connect a wired headset. The headset jack 170D may be the USB port 130, or may be a 3.5 mm open mobile terminal platform (open mobile terminal platform, OMTP) standard interface, or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile terminal 100 determines pressure strength based on a capacitance change. When a touch operation is performed on the display 194, the mobile terminal 100 detects intensity of the touch operation based on the pressure sensor 180A. The mobile terminal 100 may also calculate a touch location based on a detection signal of the pressure sensor 180A. In some embodiments, touch operations that are performed in a same touch position but have different touch operation intensity may correspond to different operating orders. For example, when a touch operation whose touch operation intensity is less than a first pressure threshold is performed on a short message application icon, an instruction for viewing a short message is performed. When a touch operation whose touch operation intensity is greater than or equal to the first pressure threshold is performed on the short message application icon, an instruction for creating a new short message is performed.

The gyroscope sensor 180B may be configured to determine a motion posture of the mobile terminal 100. In some embodiments, an angular velocity of the mobile terminal 100 around three axes (namely, axes x, y, and z) may be determined through the gyroscope sensor 180B. The gyroscope sensor 180B may be configured to implement image stabilization during photographing. For example, when a shutter is pressed, the gyroscope sensor 180B detects an angle at which the mobile terminal 100 shakes, and calculates, based on the angle, a distance for which a lens module needs to compensate, so that the lens cancels the shake of the mobile terminal 100 through reverse motion, thereby implementing the image stabilization. The gyroscope sensor 180B may be configured in a navigation scenario and a motion-sensing game scenario.

The barometric pressure sensor 180C is configured to measure barometer pressure. In some embodiments, the mobile terminal 100 calculates an altitude through a barometric pressure value measured by the barometric pressure sensor 180C, to assist in positioning and navigation.

The magnetic sensor 180D includes a Hall sensor. The mobile terminal 100 may detect opening and closing of a flip cover by using the magnetic sensor 180D. In some embodiments, when the mobile terminal 100 is a clamshell phone, the mobile terminal 100 may detect opening and closing of a clamshell by using the magnetic sensor 180D. Further, a feature such as automatic unlocking upon opening of the flip cover is set based on a detected opening or closing state of a leather case or a detected opening or closing state of the flip cover.

The acceleration sensor 180E may detect values of accelerations in various directions (usually on three axes) of the mobile terminal 100. When the mobile terminal 100 is still, a magnitude and a direction of gravity may be detected. The acceleration sensor 180E may be further configured to identify a posture of an electronic device, and is used in an application such as switching between a landscape mode and a portrait mode or a pedometer.

The distance sensor 180F is configured to measure a distance. The mobile terminal 100 may measure a distance in an infrared or a laser manner. In some embodiments, in a shooting scenario, the mobile terminal 100 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The mobile terminal 100 emits infrared light through the light emitting diode. The mobile terminal 100 detects, through the photodiode, infrared reflected light that comes from a nearby object. When detecting sufficient reflected light, the mobile terminal 100 may determine that there is an object near the mobile terminal 100. When detecting insufficient reflected light, the mobile terminal 100 may determine that there is no object near the mobile terminal 100. The mobile terminal 100 may detect, through the optical proximity sensor 180G, that a user holds the mobile terminal 100 close to an ear for a call, to automatically perform screen-off to save power. The optical proximity sensor 180G may also be used in a smart cover mode or a pocket mode to automatically perform screen unlocking or locking.

The ambient light sensor 180L is configured to sense ambient light brightness. The mobile terminal 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the mobile terminal 100 is in a pocket, to prevent an accidental touch.

The fingerprint sensor 180H is configured to collect a fingerprint. The mobile terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the mobile terminal 100 executes a temperature processing policy based on the temperature detected by the temperature sensor 180J. For example, when temperature reported by the temperature sensor 180J exceeds a threshold, the mobile terminal 100 degrades performance of a processor near the temperature sensor 180J, to reduce power consumption and implement thermal protection. In some other embodiments, when the temperature is less than another threshold, the mobile terminal 100 heats up the battery 142, to avoid abnormal shutdown of the mobile terminal 100 due to a low temperature. In some other embodiments, when the temperature is less than still another threshold, the mobile terminal 100 boosts an output voltage of the battery 142, to avoid the abnormal shutdown due to the low temperature.

The touch sensor 180K is also referred to as a "touch component". The touch sensor 180K may be disposed on the display 194, and the touch sensor 180K and the display 194 constitute a touch panel, which is also referred to as a "touchscreen". The touch sensor 180K is configured to detect a touch operation performed on or near the touch sensor 180K. A touch sensor 180K may transfer the detected touch operation to the application processor, to determine a type of a touch event. Visual output related to a touch operation may be provided through the display 194. In some other embodiments, the touch sensor 180K may alternatively be disposed on a surface of the mobile terminal 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical key, or may be a touch-key. The mobile terminal 100 may receive button input, and generate button signal input related to a user setting and function control of the mobile terminal 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the mobile terminal 100. The mobile terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The mobile terminal 100 interacts with a network through the SIM card, to implement functions such as calling and data communication. In some embodiments, the mobile terminal 100 uses an eSIM, namely, an embedded SIM card. The eSIM card may be embedded in the mobile terminal 100, and cannot be separated from the mobile terminal 100.

It may be understood that an interface connection relationship between the modules shown in this embodiment of this application is merely an example for description, and does not constitute a limitation on the structure of the mobile terminal 100. In some other embodiments of this application, the mobile terminal 100 may alternatively use an interface connection manner different from that in the foregoing embodiment, or a combination of a plurality of interface connection manners.

It may be understood that, to implement the foregoing functions, the foregoing mobile terminal includes corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by the hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

In embodiments of this application, functional modules of the mobile terminal, and the like, may be obtained through division based on the foregoing method embodiments. For example, each function module may be obtained through division based on each corresponding function, or two or more functions may be integrated into one processing module. The integrated module may be implemented in a form of hardware, or may be implemented in a form of a software functional module. It should be noted that, in embodiments of this application, module partition is an example, and is merely a logical function division. In actual implementation, another partition type may be used.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection range of this application. Any variation or replacement within the technical scope disclosed in this application shall fall within the protection range of this application. Therefore, the protection range of this application shall be subject to the protection range of the claims.

## Claims

1. A device network configuration method, applied to a mobile terminal, wherein the method comprises:
obtaining network interface card information of a first device;
creating a virtual network interface card based on the network interface card information;
obtaining, by using the virtual network interface card, network information corresponding to a wireless router; and
sending the network information to the first device, to enable the first device to establish a connection with the wireless router by using the network information.

2. The method according to claim 1, wherein the obtaining network interface card information of a first device comprises:
receiving the network interface card information broadcast by the first device.

3. The method according to claim 1, wherein before the obtaining network interface card information of a first device, the method further comprises:
sending a query request to the first device, wherein the query request is for requesting to obtain the network interface card information of the first device.

4. The method according to claim 3, wherein the query request is further used for requesting to obtain identity information of the first device, and the method further comprises:
receiving the identity information sent by the first device; and
sending a registration request to a second device based on the identity information, wherein the registration request is for obtaining a registration code.

5. The method according to claim 4, wherein the method further comprises:
receiving the registration code sent by the second device; and
sending the registration code to the first device.

6. The method according to any one of claims 1 to 5, wherein the network information comprises channel information, key information, and IP address information, and the obtaining, by using the virtual network interface card, network information corresponding to a wireless router comprises:
performing, by using the virtual network interface card, a channel scan to obtain the channel information;
performing, by using the virtual network interface card, access authentication with the wireless router to obtain the key information; and
performing, by using the virtual network interface card, DHCP application to obtain the IP address information.

7. The method according to claim 6, wherein the network information further comprises MAC address information, and the obtaining, by using the virtual network interface card, network information corresponding to a wireless router comprises:
performing, by using the virtual network interface card, ARP resolution to obtain the MAC address information.

8. A mobile terminal, comprising a memory, wherein the memory is configured to store computer program code, the computer program code comprises instructions, and when the mobile terminal reads the instructions from the memory, the mobile terminal is enabled to perform the following steps:
obtaining network interface card information of a first device;
creating a virtual network interface card based on the network interface card information;
obtaining, by using the virtual network interface card, network information corresponding to a wireless router; and
sending the network information to the first device, to enable the first device to establish a connection with the wireless router by using the network information.

9. The mobile terminal according to claim 8, wherein the obtaining the network interface card information of the first device comprises:
receiving the network interface card information broadcast by the first device.

10. The mobile terminal according to claim 8, wherein before obtaining the network interface card information of the first device, the mobile terminal further performs the following step:
sending a query request to the first device, wherein the query request is for requesting to obtain the network interface card information of the first device.

11. The mobile terminal according to claim 10, wherein the query request is further used for requesting to obtain identity information of the first device, and when the instructions are executed by the mobile terminal, the mobile terminal is enabled to further perform the following steps:
receiving the identity information sent by the first device; and
sending a registration request to a second device based on the identity information, wherein the registration request is for obtaining a registration code.

12. The mobile terminal according to claim 11, wherein the mobile terminal is enabled to further perform the following steps:
receiving the registration code sent by the second device; and
sending the registration code to the first device.

13. The mobile terminal according to any one of claims 8 to 12, wherein the network information comprises channel information, key information, and IP address information, the obtaining, by using the virtual network interface card, the network information corresponding to the wireless router comprises:
performing, by using the virtual network interface card, a channel scan to obtain the channel information;
performing, by using the virtual network interface card, access authentication with the wireless router to obtain the key information; and
performing, by using the virtual network interface card, DHCP application to obtain the IP address information.

14. The mobile terminal according to claim 13, wherein the network information further comprises MAC address information, the obtaining, by using the virtual network interface card, the network information corresponding to the wireless router comprises:
performing, by using the virtual network interface card, ARP resolution to obtain the MAC address information.

15. A computer-readable storage medium, comprising computer instructions, wherein when the computer instructions are run on a mobile terminal, the mobile terminal is enabled to perform the device network configuration method according to any one of claims 1 to 7.

16. A computer, configured to perform the device network configuration method according to any one of claims 1 to 7.
